# EUROPEAN PATENT APPLICATION

(11) **EP 4 810 238 A2**
(43) Date of publication of application: **23.09.2026**
(21) Application number: 26187298.0
(22) Date of filing: 02.12.2025
(51) Int. Cl.: B29D 35/12

(54) **METHOD OF MANUFACTURING A FOAMED POLYMER PRODUCT**

(30) Priority: 09.12.2024 CH 13542024
(62) Document number(s) of the earlier application(s) in accordance with Art. 76 EPC: 25812993.1 / 4 783 910
(71) Applicant: On Clouds GmbH, 8005 Zürich (CH)
(72) Inventor: DUONG, Binh, 8005 Zurich (CH); ORTIZ, Elias Miguel, 8005 Zurich (CH); ROMAIN, Jean-Philippe, 8005 Zurich (CH); SY, Cong Sau, 8005 Zurich (CH); NGO, Oanh, 8005 Zurich (CH)
(74) Representative: Mewburn Ellis LLP

(57) **Abstract**

The disclosure relates to a method for manufacturing a foamed polymer product 1 having a series of openings 2 and compression mold 4 comprising a series of pins 5 for use in said method. The method comprising the steps of providing a foamed polymer preform 3 having a certain height, width and length and comprising a series of openings 2 extending into or through the preform 3; inserting the preform 3 into the compression mold 4 by sliding the preform 3 with the series of openings 2 onto the corresponding series of pins 5 of the compression mold 4; and shaping of the preform 3 in the compression mold 4 to form the product 1 having a compressed height, width and/or length by compressing the preform 3 inside the compression mold 4, in particular by pressing the top 6 and the base 7 towards each other and by heating of the preform 3 inside the compression mold 4.

## Description

### FIELD OF THE DISCLOSURE

The present disclosure generally relates to the field of polymer manufacturing, and more particularly to techniques for producing foamed polymer products, specifically shoe components such as midsoles.

### BACKGROUND OF THE DISCLOSURE

In the current state of the art, foamed polymer products for example midsoles, which are an integral component of footwear, are typically manufactured using injection molding processes. This method involves injecting a material into a mold cavity, where it cools and solidifies to form the desired shape. While effective, this process often limits the types of materials that can be used, particularly when trying to achieve specific properties such as cushioning, flexibility, or weight reduction. The injection molding process is efficient for mass production, but the material constraints and challenges in achieving certain foam characteristics remain significant drawbacks.

Another widely adopted method for manufacturing midsoles is the compression molding process. This process involves placing a polymer material into a mold and then applying pressure to form the midsole shape. Although this method allows for the production of parts with improved dimensional accuracy, the need for an additional "stock fitting" step complicates the manufacturing process, when aiming for more complex geometries. Stock fitting involves joining separate components, often adding cost and time while also introducing potential inconsistencies in product quality.

The disadvantages of these conventional methods are clear. First, the injection process limits material options, particularly when higher-performance foams, such as hyper foams (expansion rate typically above 150%), are desired for improved comfort and durability in footwear. Second, the compression molding process, though versatile, becomes less efficient due to the required stock fitting step. This inefficiency not only increases production time but also adds operational complexity, leading to higher manufacturing costs. Additionally, these processes may not be ideal for creating more intricate or variable midsole designs.

Some prior art is mentioned hereinafter.

WO9933368A2 refers to a method of manufacturing an outsole for sports shoes that involves forming through-holes in the midsole. The process includes forming and bisecting the midsole, joining the cut surfaces, and covering the lower surface of the midsole. The midsole is created using a multi-step molding process, with each step contributing to the formation of the through-holes in different sections of the shoe's structure.

WO2006112622A1 describes a midsole manufacturing method that includes the creation of through-holes that penetrate the lateral portions of the midsole. The midsole is produced using a mold assembly with a lower mold having protruding pins and an upper mold with a pressurized projecting portion that moves up and down during the molding process.

WO2019214815A1 pertains to a method for manufacturing a shoe sole with cavities. The process involves creating a first sole part in a first mold and a second sole part in a second mold, both of which include volumetric elements that form cavities within the respective sole parts. After solidification, the two sole parts are removed from their molds and placed in a third mold, where they are bonded together with a connecting material.

WO2022058212A1 discloses a method for producing a foam-molded shoe component. The method begins with providing a polymer granulate, which is then pretreated in an autoclave with a physical propellant. The polymer granulate is subsequently melted to produce a molten polymer composition, which is foamed through the expansion of the physical propellant.

KR102503005B1 involves a method for manufacturing a double midsole using an EVA plate and polyurethane material. The process starts with cutting the EVA plate to form a lower midsole model, to which a spandex adhesive layer is applied. Polyurethane is injected into a cavity surrounded by the lower midsole's edge, and the upper surface is covered with a TPU film, followed by the integral molding of the upper midsole made of foamed polyurethane.

EP4179910A1 relates to a method for manufacturing a sole assembly for footwear. The method includes injecting a first material into a first mold to form a first component with channel elements, followed by injecting a second material into a second mold to form a second component with corresponding channel elements. These components are then aligned and secured together to form the sole assembly.

### SUMMARY OF THE DISCLOSURE

It is an objective of the present disclosure to address at least some of the drawbacks of the prior art.

One aspect of the present disclosure relates to a method for manufacturing a foamed polymer product having a series of openings, in particular to a method for manufacturing a shoe component such as a midsole of a shoe having a series of openings. The method comprises the steps of providing a foamed polymer preform and a corresponding compression mold to receive the preform for shaping it into a (final or intermediate) product.

The method comprises in a preferred variation the steps of providing a foamed polymer preform having a certain height, width and length and comprising a series of openings extending into or through the preform. The method further includes providing of a compression mold comprising a series of pins, a top and a base. Said top and base being displaceable relative to each other between an open state in which the preform can be received in the compression mold, and a closed state in which the compression mold forms a cavity defining a shape of the product. The method further includes inserting of the preform into compression mold by sliding the preform with the series of openings onto the corresponding series of pins of the compression mold; and shaping of the preform in the compression mold to form the product having a compressed height, width and/or length by compressing the preform inside the compression mold, in particular by pressing the top and the base towards each other; and heating of the preform inside the compression mold.

This method allows the production of the foamed polymer product, including complex geometries, without the need for a (subsequent) stock fitting step. Furthermore, the disclosed method allows for the use of hyper foams, obtained by supercritical foaming (SCF), overcoming the material limitations and inefficiencies associated with the prior art, at least in part.

In a preferred variation the foamed polymer product is manufactured using a supercritical foaming process with physical blowing agents such as carbon dioxide (CO2), nitrogen (N2) or a mixture thereof (N2 & CO2). A supercritical foaming process is usually understood as a method in which a gas is introduced into a polymer matrix at supercritical conditions, meaning the gas is at a temperature and pressure above its critical point, resulting in the formation of foam as the gas expands within the polymer. One advantage of this is that it allows the use of non-crosslinked polymers, which are typically more difficult to foam using traditional chemical blowing agents. Non-crosslinked polymers, such as thermoplastic polyurethane (TPU), thermoplastic polyester elastomer (TPEE), and polyether block amide (Pebax), can be expanded more effectively with physical blowing agents. This also provides the ability to produce recyclable midsoles, which can offer long-term environmental benefits by reducing material waste.

The use of physical blowing agents may allow for higher expansion ratios compared to ethylene-vinyl acetate (EVA) injection processes, with ratios reaching up to 250%. An expansion ratio refers to the degree to which the polymer increases in volume during the foaming process. One advantage of this higher expansion is that it enables the production of lighter midsoles with improved cushioning properties, making them suitable for high-performance footwear applications. The ability to achieve such high expansion ratios with thermoplastic materials like TPU, mTPU (modified Thermoplastic Polyurethane) and Pebax further broadens the range of material properties that can be tailored for specific performance needs, such as enhanced energy return or increased durability.

Good results can be achieved when the product is made from TPU, TPEE, or Pebax. TPU refers to a highly versatile elastomer with a wide range of hardness and flexibility, TPEE is a copolymer with both elastic and thermoplastic properties, and Pebax is a flexible polymer known for its high energy return and resistance to abrasion. Combinations of these materials are also possible, such as EVA-TPEE blended, Pebax-EVA blended or blended TPU. One advantage of using these materials is their superior mechanical properties, which make them ideal for producing midsoles with excellent cushioning, durability, and energy return. Additionally, these polymers are recyclable, contributing to more sustainable manufacturing practices in the footwear industry. Material combinations with polyolefin elastomers (POE) are also possible, such as EVA/POE. Further material combinations may include OBC (olefin block-copolymer), such as EVA/OBC. If appropriate pure POE and pure OBC can also be used. In some variations, PBAT (polybutylene adipate terephthalate) is used as material for the product, in particular for an at least partially biodegradable product.

In some variations at least one opening of the series of openings is a through-opening. Preferably the series of openings is formed as a series of through-openings passing through the preform in a direction substantially transversal its length.

Depending on the field of application, after shaping of the preform into the product, the product is removed from the compression mold and the compressed height is decreased compared to the height of the preform by a factor greater than 1.2, preferably greater than 1.4, in particular greater or equal to 1.6. A factor of height reduction greater than 1.2 may be understood as a situation where the final height of the product is at least 20% less than the height of the preform before compression.

In some variations, it may be provided that a release agent is applied to the compression mold cavity surfaces. A release agent may be understood as a substance applied to the mold surfaces to prevent the material being compressed from sticking to the mold during or after the compression step. This arrangement ensures that the molded preform can be easily separated from the mold once the compression step is complete.

Good results can be achieved when the height reduction is carefully controlled to achieve optimal cushioning and energy absorption properties, ensuring that the final product maintains the desired balance between flexibility and strength. Preferably at least one pin of the series of pins supports the preform during compression with respect to the top and/or base such that compression forces from the top and/or the base are at least partially decoupled from each other by the pin therebetween. This enables compression forces acting from the top and base to be distributed more evenly and independently, avoiding excessive deformation in specific areas of the preform.

By decoupling the forces, the pin (or series of pins) allows more precise control of the molding process, leading to improved process control and thus the (mechanical) characteristics of the final product. Good results can be achieved when an upper section of the preform arranged in the closed state between the top and a pin of the series of pins is compressed at a first compression rate and a lower section of the preform arranged in the closed state between the base and said pin is compressed at a second compression rate being lower or higher than the first compression rate. This allows to fine-tune the mechanical properties of the final product by controlling the density and structural characteristics of different parts of the preform. For example, the upper section may be compressed more intensely to increase its firmness or resilience, while the lower section may be compressed less to retain its cushioning properties, or vice versa, depending on the desired characteristics of the final product. In footwear midsoles, the differential compression can provide varying levels of support and energy return in different areas of the shoe, improving comfort and/or stability.

It may be provided that providing a foamed polymer preform comprises obtaining a polymer blank having an initial height, width and length and comprising a series of openings extending through the blank; and expanding the blank into a foamed polymer preform in an autoclave by a foaming process, said preform having an expanded height, width and length. Preferably the foaming process in the autoclave causes the polymer blank to expand uniformly, with the height, width, and length.

In some variations the blank is one-piece obtained from an injection molding process in particular by cold-shot injection molding. A one-piece blank may be understood as a singular, continuous form that is created in a single manufacturing step without requiring any subsequent assembly or joining of separate parts. The absence of seams or joints reduces potential weak points in the final product. In addition, using a one-piece blank omits the manufacturing steps of joining two or more parts to obtain the blank.

In case of midsoles, good results can be achieved when the midsole is formed with complex geometries using a mold design that includes specifically configured pins and corresponding indentations. A mold design typically refers to the physical structure that shapes the polymer during the manufacturing process. The pins and the corresponding indentations in the mold are arranged to accommodate the intricate shapes of the midsole. This enables the production of midsoles with enhanced mechanical performance, such as improved vertical and/or horizontal cushioning, in a single shaping step.

Another aspect of the disclosure is directed to a compression mold for use in the method as described herein. In a preferred variation, the compression mold comprises a series of pins, a top and a base being displaceable relative to each other between an open state in which a foamed polymer preform can be received, and a closed state in which the compression mold forms a cavity defining a shape of the product.

In some variations the compression mold comprises an intermediate frame. Said intermediate frame being in the closed state arranged between the top and the base and the pins of the series of pins are in the closed state clamped between two opposite side faces of the intermediate frame. Depending on the implementation the intermediate frame may facilitate insertion of the preform and removal of the product after shaping, since the top and the base can be arranged pivotable away therefrom. The top and base being pivotable away from the intermediate frame means they can be moved aside or rotated to allow unobstructed access to the mold cavity, the product arranged therein respectively. One advantage of this is improved manufacturing efficiency, as operators can quickly and safely insert the preform into the mold and remove the final product after shaping. Additionally, it enhances the precision of the molding process by maintaining the alignment of the intermediate frame and pins, ensuring consistent quality and dimensional accuracy in the final products.

Good performance is possible, when the intermediate frame comprises a pin section and a receiving section arranged displaceable relative to each other, wherein the pins the series of pins is are attached to or integrally formed with the pin section extending away from a side face of the pin section, and wherein the receiving section comprises in a side face a series of indentations for receiving in the closed state corresponding tips of the pins in form fitting manner. A pin section may be understood as the portion of the intermediate frame that houses the pins, with the pins extending away from a side face of the pin section. A receiving section may be understood as the portion of the intermediate frame designed to accommodate the tips of the pins when the mold is in the closed state. One advantage of this arrangement is that it stabilizes the pins, preventing any lateral movement or misalignment during the molding process.

Preferably the pin section and the receiving section are connected by a hinge and the tips of the pins have a rounded shape for pivoting the sections relative to each other thereby engaging or disengaging each tip with the corresponding indentation. The rounded shape of the pin tips allows smooth movement as the pin section is rotated relative to the receiving section, ensuring that the tips can easily slide into or out of the indentations in the receiving section.

In some other variations the intermediate frame comprises a first pin section and a second pin section arranged displaceable relative to each other. Pins of a first series of pins are preferably attached to or integrally formed with the first pin section extending away from a side face of the first pin section. Similarly, pins of a second series of pins are preferably attached to or integrally formed with the second pin section extending away from a side face of the second pin section. Both, the first and the second series of pins extent in the closed state of the compression mold into the (same) cavity.

Depending on the design, at least one pin of the first series of pins adjoins in the closed state a pin of the second series of pins temporarily forming in combination a through pin, also referred to as a split through pin. In the closed state, the at least one split through pin usually extends between the first pin section and the second pin section. Typically, the split (adjoining region) is in the closed state within the preform.

Alternatively, or in addition, at least one pin of the first series of pins and/or at least one pin of the second series of pins is a floating pin that extends in the closed state only partially between the first and the second pin section of the intermediate frame. This can allow to form a blind hole in the foamed polymer product. The at least one floating pin is usually in the closed state of the compression mold not clamped between the first and the second pin sections.

Preferably the first and the second series of pins comprise floating pins that are arranged in an alternating manner in longitudinal direction and/or in an interdigitated manner in transversal direction to withstand compression forces.

In case of an intermediate frame having two pin sections for the same cavity (compared to one pin section and one receiving section), the first pin section and the second pin section can be connected by at least one linear guide, preferably by two linear guides arranged at opposite ends of the pin sections. The linear guide allows precise displacement of the first and the second pin section between an extended and a retracted position, in particular in the transversal direction. In the extended position the preform can be inserted, the pin sections are moved into the retraced position. In the retracted position, the pins of the first and of the second series of pins are (fully) slid into the openings of the preform.

If appropriate, the compression mold comprises two cavities for two preforms to be shaped simultaneously.

The intermediate frame in this case may comprise two first pin sections and two second pin section. The two first pin sections can be arranged next to each other, in particular the two first pin sections can be integrally formed, wherein the pins of each of the series of first pins extend in a direction away from each other, in particular in the transversal direction. The two second pin sections are in this configuration preferably arranged opposite to each other with the two first pin sections therebetween.

In some variation, a diameter of the pins at half-length of each pin is greater or equal to 3 mm, preferably greater or equal to 4.5 mm. A pin diameter may be understood as the measurement across the cross-section of the pin at a point midway along its length, typically the shortest distance or the distance in the direction between the top and the base is taken. Good results can be achieved when the pin diameter is sufficient to resist bending or deformation under compression forces, allowing a separation of compression forces from the top and from the base. Alternatively, or in addition, the pins in the series of pins are spaced apart a certain spacing, preferably the spacing being preferably greater or equal to 5 mm, in particular greater or equal to 8 mm.

Preferably at least one pin has a rejuvenating cross-section, in particular decreasing towards the tip of the pin. A rejuvenating cross-section may be understood as a cross-sectional shape that tapers or narrows as it extends from the base of the pin towards the tip. The rejuvenating cross-section facilitates smoother insertion into the opening of the preform and removal of the pins after shaping.

Another aspect of the disclosure is directed to foamed polymer product, in particular a shoe component such as a midsole of a shoe, manufactured by the method described herein and/or by using a compression mold as described herein. The foamed polymer product having a certain height, width and length, wherein along the length of the product a series of openings extending into or through the product.

In a preferred variation, the series of openings separates an upper section having a first density and lower section having a second density being lower or higher than the first density.

The embodiments of the method for manufacturing a foamed polymer product described herein also disclose corresponding embodiments of the compression mold for use in the method and of the foamed polymer product and vice versa. It is to be understood that both the foregoing general description and the following detailed description present embodiments and are intended to provide an overview or framework for understanding the nature and character of the disclosure. The accompanying drawings are included to provide a further understanding and are incorporated into and constitute a part of this specification. The drawings illustrate various embodiments, and together with the description serve to explain the principles and operation of the concepts disclosed.

### BRIEF DESCRIPTION OF THE DRAWINGS

The herein described disclosure will be more fully understood from the detailed description given herein below and the accompanying drawings which should not be considered limiting to the disclosure described in the appended claims. The drawings are showing:
- Fig. 1: a blank;
- Fig. 2: a foamed polymer preform;
- Fig. 3: a foamed polymer product;
- Fig. 4: a first variation of a compression mold in a closed state;
- Fig. 5: the first variation of the compression mold of Fig.4 in a partially open state;
- Fig. 6: another perspective view of the first variation of the compression mold of Fig. 5;
- Fig. 7: a detailed view of the compression mold of Fig. 6 indicated by box A;
- Fig. 8: a second variation of a compression mold in an open state;
- Fig. 9: part of an intermediate frame of the first variation of the compression mold of Fig. 5
- Fig. 10: a second variation of a compression mold in an open state in a perspective view;
- Fig. 11: the second variation of Fig. 10 in a partially closed state in a perspective view with hidden edges displayed; and
- Fig. 12: a third variation of a compression mold in a partially closed state in a perspective view with hidden edges displayed.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

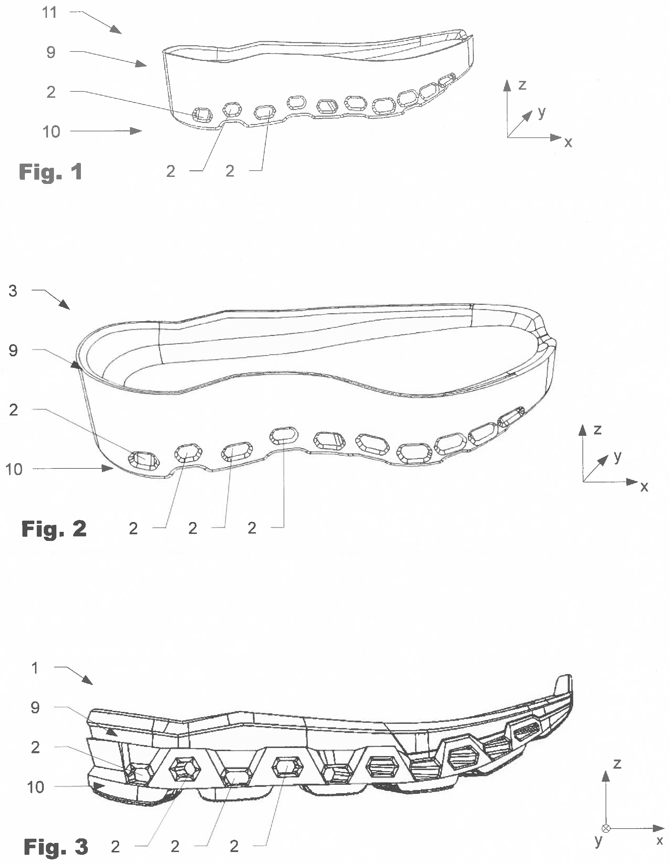

**Figure 1** shows a blank 11 comprising an upper section 9 and a lower section 10, with a series of openings 2 extending through the blank 11 in a transversal direction y. In **Figure 2**, a foamed polymer preform 3 is shown. The preform 3 includes an upper section 9 and a lower section 10 with a series of openings 2 extending through the lower section 10. This figure illustrates the preform 3 after the blank 11 has undergone the foaming process, which results in the expanded form that is prepared for compression molding.

A first variation of a foamed polymer product 1 according to the disclosure is shown in **Figure 3**. The foamed polymer product 1 includes an upper section 9 and a lower section 10, with the series of openings 2 being arranged therebetween. The openings 2 extend in the transversal direction y. The product 1 is depicted after the shaping process in a compression mold 4, where the preform 3 has been compressed to achieve the final desired shape and structural characteristics.

In **Figures 1** to **3** the results after three steps of the method are shown: Cold-shot (injection molding), Autoclave (foaming), and Compression (shaping).

The following parameters (temperature, pressure, time, shrinkage rate etc.) may vary depending on the material used and the characteristics desired in the final product. The values given for these parameters are a mere examples and not limiting.

After the Cold-shot step (**Figure 1**), the initial blank 11 is obtained, which comprises openings 2. This process results in a shrinkage rate of about 1/200. The blank 11 is molded at a temperature of approximately 180°C for a duration of about 10 minutes.

In the Autoclave step (resulting in the preform 3 shown in **Figure 2**), the blank 11 undergoes a foaming process, transforming it into a preform 3 with an expansion rate of about 2 (200%). The autoclave environment applies a temperature of approximately 130°C and a pressure of about 22 MPa. The process lasts for 3.5 hours, during which the preform 3 material expands significantly, roughly doubling in volume.

In the Compression step (resulting in the product 1 shown **Figure 3**), the expanded preform is compressed to its final shape. The compression ratio (CR) for width in transversal direction y and length in longitudinal direction x is maintained at about 1:1, meaning no shrinkage or expansion occurs along these directions, while the thickness in height direction z is compressed with a CR of 1.6, indicating a reduction in thickness by about 60%. The compression takes place at a temperature of around 150°C, with the process lasting 10 to 15 minutes, preferably 13 minutes for both the heating and cooling phases. The preform is cooled below 35°C to set the final structure.

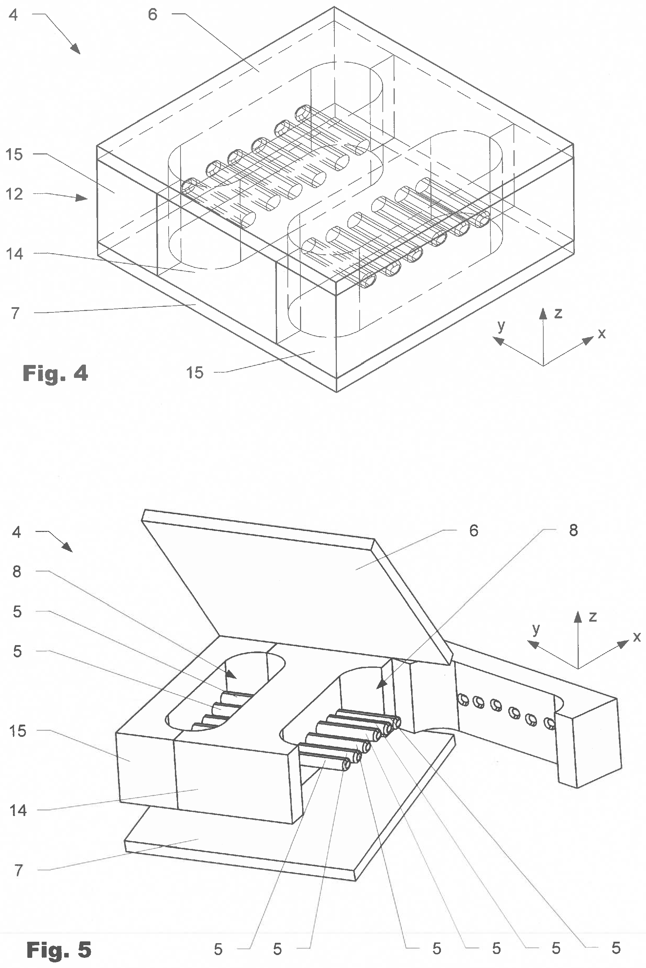

**Figure 4** shows a first variation of a compression mold in a closed state and in **Figure 5** the first variation of the compression mold of **Figure 4** is shown in a partially open state. The mold comprises a top 6 and a base 7, which are arranged to form a cavity 8 where the preform 3 is compressed and shaped. In the shown variation, the compression mold 4 comprises two cavities 8 for receiving and shaping two preforms 3.

An intermediate frame 12 is arranged between the top 6 and the base 7. A first series of pins 5 and a second series of pins 5 extend in transversal direction y away from a pin section 14 of the intermediate frame 12. A first and a second receiving section 15 is also depicted, engaging with the respective pins 5. In this closed state, the mold is fully prepared to shape preforms within the cavities 8.

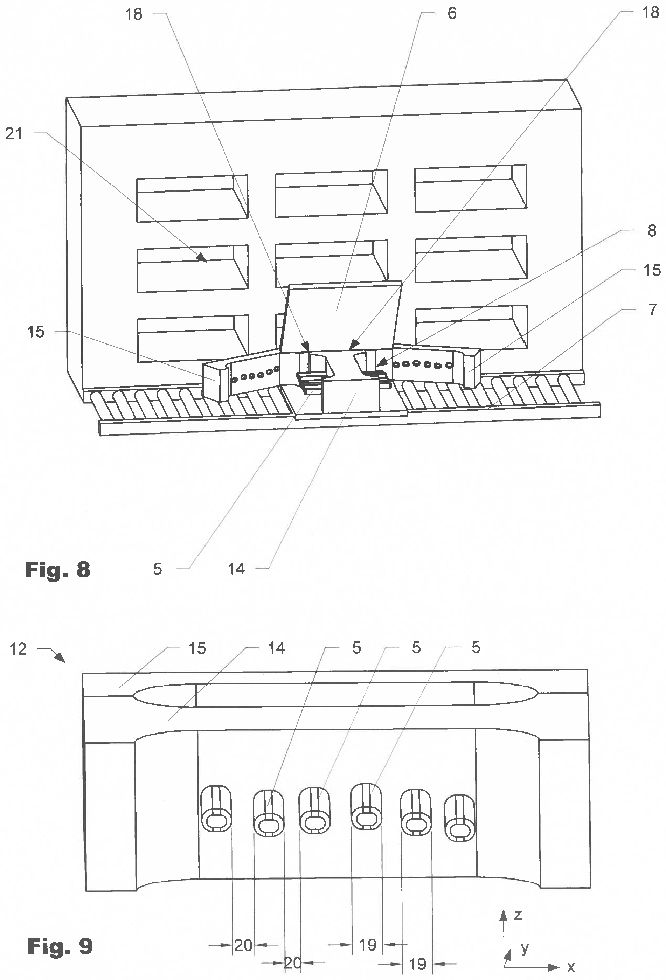

In **Figure 5**, a first variation of the compression mold 4 is shown in a partially open state (the right side fully open, while on the left side the receiving section 15 is engaged with the pin section 14). A second variation of a compression mold 4 is shown in **Figure 8** in a (fully) open state. The top 6 is pivoted away from the base 7, revealing the series of pins 5 in the pin section 14 and the corresponding receiving sections 15. This partially open state illustrates how the mold functions to allow easy insertion and removal of the preform 3. The intermediate frame 12, along with the pin section 14, is shown securely positioned between the top 6 and base 7.

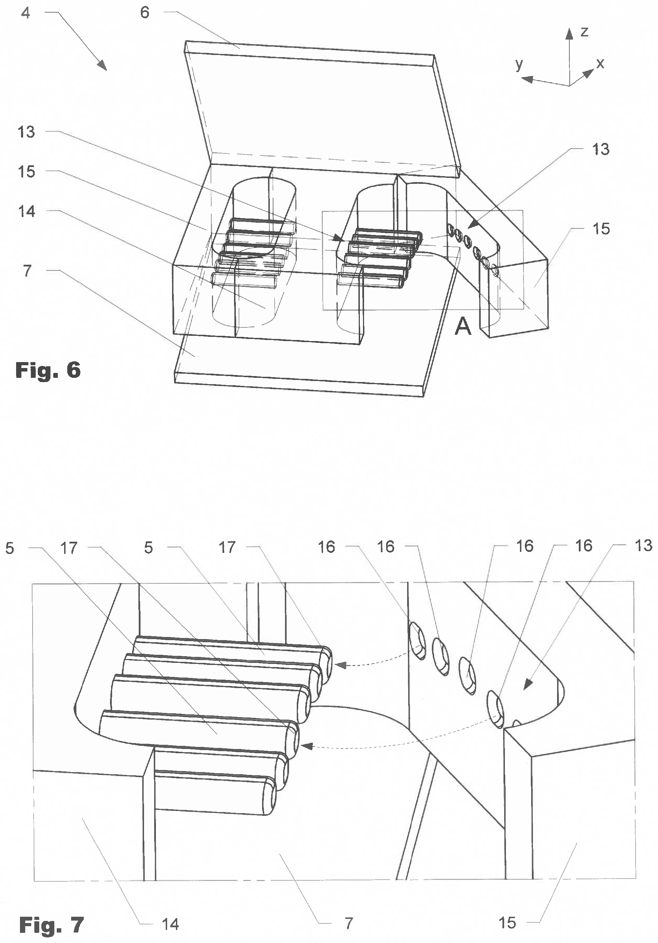

**Figure 6** shows another perspective view of the first variation of the compression mold 4 of **Figure 5****.** In **Figure 7** a detailed view of the compression mold 4 of **Figure 6** is shown indicated by box A. As indicated with the dotted arrow in **Figure 7**, the receiving section 15 is arranged pivotable towards the pin section 14 to close the compression mold 4. Hereby the indentations 16 arranged on a (inward) side face 13 of the receiving section 15 are each receiving a tip 17 of a pin 5. The pins 5 extend away from a side face 13 of the pin section 14, which is in the closed state arranged facing the side face 13 of the receiving section 15..The tips 17 of the pins 5 have a rounded shape. This allows to effortlessly close the receiving section 15.

**Figure 9** shows part of an intermediate frame 12 of the first variation of the compression mold 4 in a lateral view with the receiving section 15 and the top 6 and the base 7 not displayed. As visible, the pins 5 have a rejuvenating cross-section towards their tips 17. A diameter 19 of the pins 5 at half length in transversal direction y of each pin 5 is greater or equal to 4.5 mm. Further, the pins 5 in the series of pins 5 are spaced apart a certain spacing 20 greater or equal to 8 mm.

This increases the resistance of the pins 5 against bending or breaking when compression forces are applies.

In **Figure 8** a second variation of a compression mold 4 in an open state is shown with the top 6 pivoted from the intermediate frame 12 about a hinge 18. Similarly, both receiving sections 15 of the intermediate frame 12 are pivoted laterally outward about separate hinges 18 allowing to insert two preforms 3, by sliding them with their openings 2 onto the respective pins 5. Once the preforms are inserted into the cavities 8 of the compression mold 4, the mold 4 is closed and arranged in a press 21, which is configured to press the top 6 and base 7 towards each other. Since the compression mold 4 is preferably made primarily from metal, heat supplied by the press 21 or by another source is transferred via the mold 4 to the preforms 3 therein. This allows to partially plasticize the material of the preform 3 and shape it.

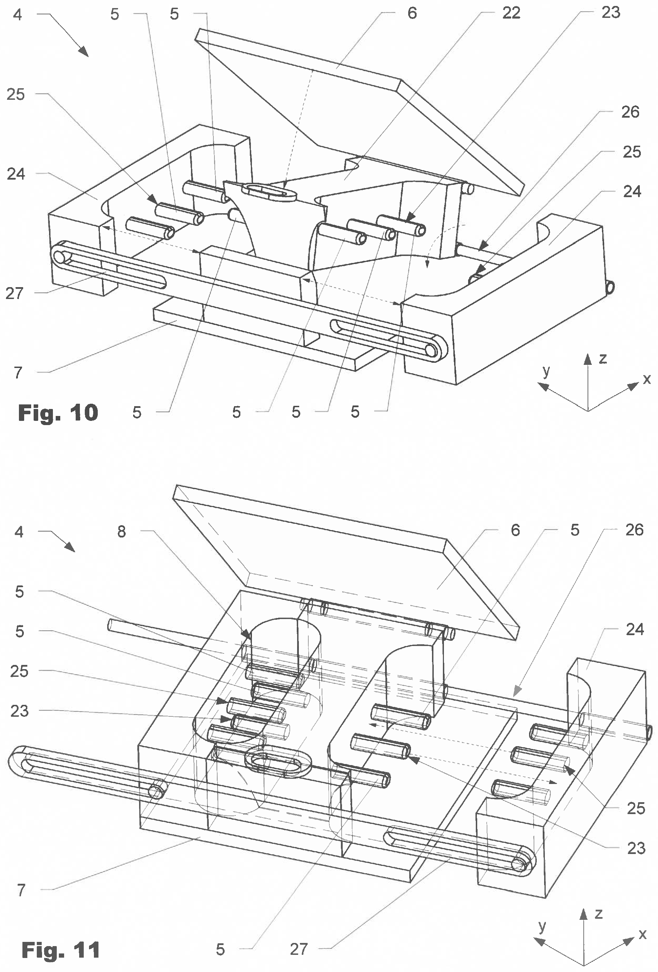

**Figure 10** shows a perspective view of a second variation of the compression mold 4 in its open configuration. In contrast to the first variation, the intermediate frame 12 comprises a first pin section 22 and two second pin section 24 arranged opposite to each other with respect to the transverse direction y on wither side of the first pin section 22. The two second pin sections 24 are arranged linearly displaceable with respect to the first pin section 22 in the transverse direction y (indicated by dashed arrows). Two linear guides 26, 27 connect the two second pin sections 24 to the first pin section 22 and enable the linear displacement.

The first pin section 22 carries two series of first pins 23 each extending away from the first pin section 22 towards the respective second pin section 24. To allow sliding a preform onto the pins 5 of the first series of pins 23, the first pin section 22 is arranged rotatable about the linear guide 26 (indicated by dashed arrow). Each of the second pin sections 24 comprises a series of second pins 25 respectively extending towards the first pin section 22.

**Figure 11** shows the same second embodiment, the second pin section 22 on the left into its retracted position, while the second pin section 22 on the right is still in the extended position. In this partially closed state, on the left side the pins of the first series 23 alternate with the pins of the second series 25 i.e. alternating in the longitudinal direction x (indicated with dashed arrows). In the shown variation, at least some of the pins 5 are designated as floating pins 5. In the closed state of the compression mold 4 the floating pins 5 extend only partially between the two pin sections 22, 24.

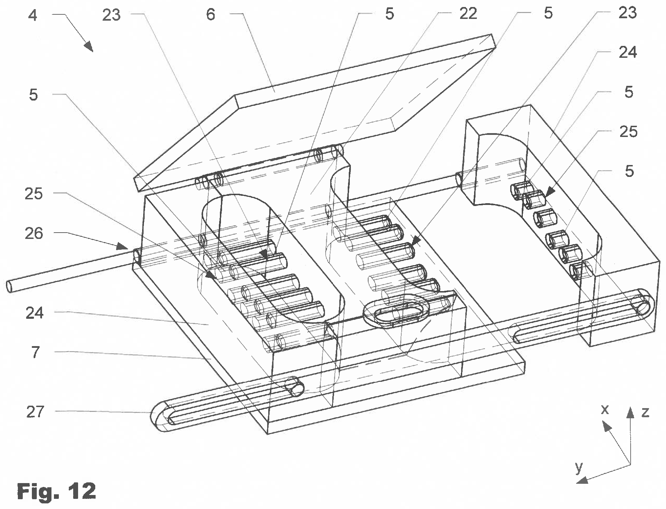

**Figure 12** shows a third variation of the compression mold 4 also in a partially closed condition similar to the second variation (Figure 11), but here at least one pin of the first series 23 aligns precisely with a corresponding pin of the second series 25. Each aligned pair of pins forms a through pin (split through pin) that spans the distance between the respective first and second pin section 22, 24 through the cavity 8. This allows the through pins to be clamped between the first and the second pin section 22, 24Rather, the words used in the specification are words of description rather than limitation, and it is understood that various changes may be made without departing from the scope of the disclosure.

**LIST OF DESIGNATIONS**

| | | | |
|---|---|---|---|
| 1 | Foamed polymer product | 14 | Pin section |
| 2 | Opening (series) | 15 | Receiving section |
| 3 | Preform | 16 | Indentation (receiving section) |
| 4 | Compression mold | 17 | Tip (pin) |
| 5 | Pin (series) | 18 | Hinge |
| 6 | Top (compression mold) | 19 | Diameter |
| 7 | Base (compression mold) | 20 | Spacing |
| 8 | Cavity (compression mold) | 21 | Press |
| 9 | Upper section (preform) | 22 | First pin section |
| 10 | Lower section (preform) | 23 | First series of pins |
| 11 | Blank | 24 | Second pin section |
| 12 | Intermediate frame (compression mold) | 25 | Second series of pins |
| | | 26 | First linear guide |
| 13 | Side face (intermediate frame) | 27 | Second linear guide |
| x | Longitudinal direction | | |
| y | Transversal direction | | |
| z | Height direction | | |

The following numbered paragraphs (paras.) contain further statements of various aspects of the present invention:
1. Method for manufacturing a foamed polymer product (1), in particular a shoe component such as a midsole of a shoe, having a series of openings (2), the method comprising the steps of
   a. providing a foamed polymer preform (3) having a certain height, width and length and comprising a series of openings (2) extending into or through the preform (3)
   b. providing a compression mold (4) comprising a series of pins (5), a top (6) and a base (7), the top (6) and the base (7) being displaceable relative to each other between
      i. an open state in which the preform (3) can be received in the compression mold (4), and
      ii. a closed state in which the compression mold (4) forms a cavity (8) defining a shape of the product (1);
   c. inserting the preform (3) into the compression mold (4) by sliding the preform (3) with the series of openings (2) onto the corresponding series of pins (5) of the compression mold (4); and
   d. shaping of the preform (3) in the compression mold (4) to form the product (1) having a compressed height, width and/or length by
      i. compressing the preform (3) inside the compression mold (4), in particular by pressing the top (6) and the base (7) to-wards each other; and
      ii. heating of the preform (3) inside the compression mold (4).
2. The method according to para 1, **wherein** at least one opening (2) of the series of openings (2) is a through-opening, in particular wherein the series of openings (2) is formed as a series of through-openings (2) passing through the preform (3) in a direction (y) substantially transversal its length.
3. The method according to any of the preceding paras, **wherein** after shaping of the preform (3) into the product (1), the product (1) is removed from the compression mold (4) and the compressed height is decreased compared to the height of the preform (3) by a factor greater than 1.2, preferably greater than 1.4, in particular greater or equal to 1.6.
4. The method according to any of the preceding paras, **wherein** at least one pin (5) of the series of pins (5) supports the preform (3) during compression with respect to the top (6) and/or base (7) such that compression forces from the top (6) and/or the base (7) are at least partially decoupled from each other by the pin (5) therebetween.
5. The method according to any of the preceding paras, **wherein** an upper section (9) of the preform (3) arranged in the closed state between the top (6) and a pin (5) of the series of pins (5) is compressed at a first compression rate and an lower section (10) of the preform (3) arranged in the closed state between the base (7) and said pin (5) is compressed at a second compression rate being lower or higher than the first compression rate.
6. The method according to any of the preceding paras, **wherein** providing a foamed polymer preform (3) comprises
   a. obtaining a polymer blank (11) having an initial height, width and length and comprising a series of openings (2) extending through the blank (11); and
   b. expanding the blank (11) into a foamed polymer preform (3) in an autoclave by a foaming process, said preform (3) having an expanded height, width and length.
7. The method according to para 6, **wherein** the blank (11) is one-piece obtained from an injection molding process.
8. Compression mold (4) for use in the method according to any of paras 1 to 7, said compression mold (4) comprising a series of pins (5), a top (6) and a base (7) being displaceable relative to each other between
   a. an open state in which a foamed polymer preform (3) can be received, and
   b. a closed state in which the compression mold (4) forms a cavity (8) defining a shape of the product (1).
9. The compression mold (4) according to para 8, **wherein** the compression mold (4) comprises an intermediate frame (12), wherein the intermediate frame (12) is arranged between the top (6) and the base (7) when in the closed state and wherein the pins (5) of the series of pins (5) are clamped between two opposite side faces (13) of the intermediate frame (12) when in the closed state.
10. The compression mold (4) according to para 9, **wherein** the intermediate frame (12) comprises a pin section (14) and a receiving section (15) arranged displaceable relative to each other, wherein
   a. the pins (5) of the series of pins (5) are attached to or integrally formed with the pin section (14) extending away from a side face (13) of the pin section (14), and wherein
   b. the receiving section (15) comprises in a side face (13) a series of indentations (16) for receiving in the closed state corresponding tips (17) of the pins (5) of the series of pins (5) in a form fitting manner.
11. The compression mold (4) according to para 10, **wherein** the pin section (14) and the receiving section (15) are connected by a hinge (18) and the tips (17) of the pins (5) have a rounded shape for pivoting the sections (14, 15) relative to each other thereby engaging or disengaging each tip (17) with the corresponding indentation (16).
12. The compression mold (4) according to para 8, **wherein** the compression mold (4) comprises an intermediate frame (12), wherein the intermediate frame (12) is arranged between the top (6) and the base (7) when in the closed state, wherein the intermediate frame (12) comprises first pin section (22) with a first series of pins (23) and a second pin section (24) with a second series of pins (25).
13. The compression mold (4) according to para 12, **wherein** the first and the second pin section (22, 24) are connected by at least one linear guide (26) to be displaceable relative to each other between an extended and a retracted position, in particular in the transversal direction (y).
14. The compression mold (4) according to para 12 or 13, **wherein**
   a. at least one pin (5) of the first series of pins (23) adjoins in the closed state a pin (5) of the second series of pins (25) temporarily forming in combination a through pin; and/or
   b. at least one pin (5) of the first series of pins (23) and/or at least one pin (5) of the second series of pins (25) is a floating pin extending in the closed state only partially between the first and the second pin section (22, 24) of the intermediate frame (12).
15. The compression mold (4) according to any of the preceding paras 9 and 14, **wherein**
   a. a diameter (19) of the pins (5) at half-length of each pin (5) is greater or equal to 3 mm, preferably greater or equal to 4.5 mm; and/or
   b. the pins (5) in the series of pins (5) are spaced apart a certain spacing (20), preferably the spacing (20) being preferably greater or equal to 5 mm, in particular greater or equal to 8 mm.
16. The compression mold (4) according to any of the preceding paras 9 to 15, **wherein** at least one pin (5) has a rejuvenating cross-section, in particular decreasing towards the tip (17) of the pin (5).
17. Foamed polymer product (1), in particular a shoe component such as a midsole of a shoe, manufactured by a method according to any of paras 1 to 7, having a certain height, width and length, wherein along the length of the product (1) a series of openings (2) extending into or through the product (1).
18. The product (1) according to para 17, **wherein** the series of openings (2) separates an upper section (9) having a first density and lower section (10) having a second density being lower or higher than the first density.

## Claims

1. A method for manufacturing a foamed polymer midsole having a series of openings (2), the method comprising the steps of
a. providing a foamed polymer preform (3) having a certain height, width and length and comprising a series of openings (2) extending into or through the preform (3)
b. providing a compression mold (4) comprising a series of pins (5), a top (6) and a base (7), the top (6) and the base (7) being displaceable relative to each other between
i. an open state in which the preform (3) can be received in the compression mold (4), and
ii. a closed state in which the compression mold (4) forms a cavity (8) defining a shape of the product (1);
c. inserting the preform (3) into the compression mold (4) by sliding the preform (3) with the series of openings (2) onto the corresponding series of pins (5) of the compression mold (4); and
d. shaping of the preform (3) in the compression mold (4) to form the product (1) having a compressed height, width and/or length by
i. compressing the preform (3) inside the compression mold (4), in particular by pressing the top (6) and the base (7) to-wards each other; and
ii. heating of the preform (3) inside the compression mold (4); wherein
an upper section (9) of the preform (3) arranged in the closed state between the top (6) and the series of pins (5) is compressed at a first compression rate and an lower section (10) of the preform (3) arranged in the closed state between the base (7) and the series of pins (5) is compressed at a second compression rate being lower or higher than the first compression rate.

2. The method according to claim 1, wherein at least one opening (2) of the series of openings (2) is a through-opening, in particular wherein the series of openings (2) is formed as a series of through-openings (2) passing through the preform (3) in a direction (y) substantially transversal its length.

3. The method according to any of the preceding claims, wherein after shaping of the preform (3) into the product (1), the product (1) is removed from the compression mold (4) and the compressed height is decreased compared to the height of the preform (3) by a factor greater than 1.2, preferably greater than 1.4, in particular greater or equal to 1.6.

4. The method according to any of the preceding claims, wherein at least one pin (5) of the series of pins (5) supports the preform (3) during compression with respect to the top (6) and/or base (7) such that compression forces from the top (6) and/or the base (7) are at least partially decoupled from each other by the pin (5) therebetween.

5. The method according to any of the preceding claims, wherein providing a foamed polymer preform (3) comprises
a. obtaining a polymer blank (11) having an initial height, width and length and comprising a series of openings (2) extending through the blank (11); and
b. expanding the blank (11) into a foamed polymer preform (3) in an autoclave by a foaming process, said preform (3) having an expanded height, width and length.

6. The method according to claim 5, wherein the blank (11) is one-piece obtained from an injection molding process.

7. A midsole compression mold (4), said compression mold (4) comprising a series of pins (5), a top (6) and a base (7) being displaceable relative to each other between
a. an open state in which a foamed polymer preform (3) can be received, and
b. a closed state in which the midsole compression mold (4) forms a cavity (8) defining a shape of a midsole (1);
**characterised in that**
an upper section of the preform is arranged in the closed state between the top and the series of pins and a lower section of the preform is arranged in the closed state between the base and the series of pins;
the series of pins support the preform during compression with respect to the top and bottom to decouple the compression forces from the top and bottom; and
the top, base and series of pins are configured such that the upper section is compressed at a first rate and the lower section is compressed at a second compression rate being lower or higher than the first compression rate.

8. The midsole compression mold (4) according to claim 7, wherein the midsole compression mold (4) comprises an intermediate frame (12), wherein the intermediate frame (12) is arranged between the top (6) and the base (7) when in the closed state and wherein the pins (5) of the series of pins (5) are clamped between two opposite side faces (13) of the intermediate frame (12) when in the closed state.

9. The midsole compression mold (4) according to claim 8, wherein the intermediate frame (12) comprises a pin section (14) and a receiving section (15) arranged displaceable relative to each other, wherein
a. the pins (5) of the series of pins (5) are attached to or integrally formed with the pin section (14) extending away from a side face (13) of the pin section (14), and wherein
b. the receiving section (15) comprises in a side face (13) a series of indentations (16) for receiving in the closed state corresponding tips (17) of the pins (5) of the series of pins (5) in a form fitting manner.

10. The midsole compression mold (4) according to claim 9, wherein the pin section (14) and the receiving section (15) are connected by a hinge (18) and the tips (17) of the pins (5) have a rounded shape for pivoting the sections (14, 15) relative to each other thereby engaging or disengaging each tip (17) with the corresponding indentation (16).

11. The midsole compression mold (4) according to claim 7, wherein the compression mold (4) comprises an intermediate frame (12), wherein the intermediate frame (12) is arranged between the top (6) and the base (7) when in the closed state, wherein the intermediate frame (12) comprises first pin section (22) with a first series of pins (23) and a second pin section (24) with a second series of pins (25).

12. The midsole compression mold (4) according to claim 11, wherein the first and the second pin section (22, 24) are connected by at least one linear guide (26) to be displaceable relative to each other between an extended and a retracted position, in particular in the transversal direction (y).

13. The midsole compression mold (4) according to claim 11 or 12, wherein
a. at least one pin (5) of the first series of pins (23) adjoins in the closed state a pin (5) of the second series of pins (25) temporarily forming in combination a through pin; and/or
b. at least one pin (5) of the first series of pins (23) and/or at least one pin (5) of the second series of pins (25) is a floating pin extending in the closed state only partially between the first and the second pin section (22, 24) of the intermediate frame (12).

14. The midsole compression mold (4) according to any of the preceding claims 8 and 13, wherein
a. a diameter (19) of the pins (5) at half-length of each pin (5) is greater or equal to 3 mm, preferably greater or equal to 4.5 mm; and/or
b. the pins (5) in the series of pins (5) are spaced apart a certain spacing (20), preferably the spacing (20) being preferably greater or equal to 5 mm, in particular greater or equal to 8 mm.

15. A foamed polymer midsole, having a certain height, width and length, wherein along the length of the product (1) a series of openings (2) extending into or through the product (1);
**characterised in that**:
the series of openings (2) separates an upper section (9) having a first density and lower section (10) having a second density being lower or higher than the first density.
